# EUROPEAN PATENT SPECIFICATION

(11) **EP 0 776 418 B1**
(45) Date of publication and mention of the grant of the patent: **14.10.1998**
(21) Application number: 95930129.2
(22) Date of filing: 09.08.1995
(51) Int. Cl.: F02M 51/06

(54) **IMPROVED FLOW AREA ARMATURE FOR FUEL INJECTOR**
ANKER MIT VERBESSERTEM DURCHFLUSSQUERSCHNITT FÜR EIN KRAFTSTOFFEINSPRITZVENTIL
INDUIT A CIRCULATION AMELIOREE D'UN INJECTEUR DE CARBURANT

(30) Priority: 18.08.1994 US 292457
(43) Date of publication of application: 04.06.1997
(73) Proprietor: Siemens Automotive Corporation, Auburn Hills, Michigan 48326-2980 (US)
(72) Inventor: Hall, Bryan, C., Newport News, VA 23602 (US); Wieczorek, David, Newport News, VA 23602 (US); Wyant, Gordon, H., Hampton, VA 23666 (US)
(74) Representative: Allen, Derek
(86) International application number: PCT/US95/10091
(87) International publication number: WO 96/06275

(56) References cited:
- FR-A- 2 545 574
- US-A- 4 610 080

## Description

### Field of the Invention

This invention relates to solenoid operated fuel injectors that are used in fuel injection systems of internal combustion engines.

### Background and Summary of the Invention

In certain solenoid operated fuel injectors the armature is disposed in the internal fuel path through the fuel injector, and the valve element joined to it so that the two form a unitary sub-assembly. Such an armature is known from US-A-5 174 505. Since the armature forms part of the magnetic circuit, its design must take into account both magnetic circuit and fuel flow restriction considerations, among others. On the other hand, the valve element design must, among various considerations, including fuel flow restriction, also take in account sealing against a hardened valve seat which it repeatedly impacts during operation. Hence the armature and valve element are typically different materials, the former being a relatively magnetically soft, ferromagnetic material and the latter a relatively magnetically hard ferromagnetic material. In efforts to minimize restriction that an armature imposes on fuel flow, armatures have heretofore been designed with internal passages that allow fuel to flow through them and/or external flats or channels that provide greater flow area around the exterior of the armature.

Flow passages in an armature are commonly in the vicinity of the armature to valve element attachment interface. Crimping and/or welding are two processes that have been used to join the valve element to the armature, and they require that certain minimum amounts of material be available at the attachment interface so that the attachment can be successfully accomplished. This tends to compromise the amount of material that can be omitted in order to improve the fuel flow past and/or through the armature. Consequently, prior armature designs employed a number of small holes through the bottom and/or flats or channels on the outside diameter. Such solutions may require multiple machining operations and/or may still not achieve the necessary reduction in restriction that is required to handle relative high flow rates.

The present invention relates to an improved solution that resides in a construction for the armature that is believed to be entirely novel, both per se and in combination with certain associated parts of a fuel injector. The invention still allows crimping and/or welding to be used to join the valve element and the armature, but provides less flow restriction.

Various features, advantages and the inventive aspects will be seen in the ensuing description and claims which are accompanied by drawings that disclose a presently preferred embodiment of the invention according to the best mode contemplated at the present time for carrying out the invention.

### Brief Description of the Drawings

Fig. 1 is a longitudinal cross-sectional view through an exemplary fuel injector embodying principles of the present invention relating to the armature.

Fig. 2 is an enlarged view of an armature/needle valve assembly of Fig. 1 by themselves, a portion of the needle valve being broken away, and the armature being in cross section.

Fig. 3 is a fragmentary view in the direction of arrows 3-3 in Fig. 2.

### Description of the Preferred Embodiment

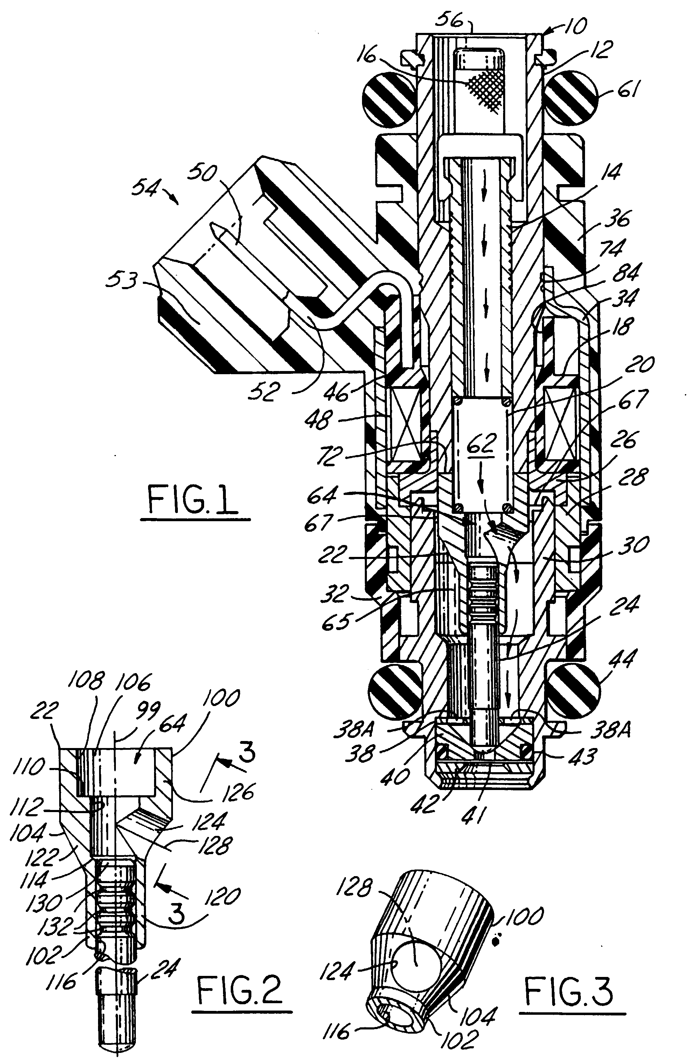

Fig. 1 shows an exemplary fuel injector 10 comprising a number of parts including a fuel inlet tube 12, an adjustment tube 14, a filter assembly 16, a coil assembly 18, a coil spring 20, an armature 22, a needle valve 24, a non-magnetic shell 26, a valve body shell 28, a valve body 30, a plastic shell 32, a coil assembly housing 34, a non-metallic overmold cover 36, a needle guide member 38, a valve seat member 40, a thin disk orifice member 41, a backup retainer member 42, a small O-ring seal 43, and a large O-ring seal 44.

The needle guide member 38, the valve seat member 40, the thin disk orifice member 41, the backup retainer 42 and the small O-ring seal 43 form a stack that is disposed at the nozzle end of fuel injector 10, as shown in a number of commonly assigned patents, such as U.S. 5,174,505. Armature 22 and needle valve 24 are joined together to form an armature/needle assembly. Before focusing in detail on the inventive features relating to armature 22, further general description of fuel injector 10 will be given.

Coil assembly 18 comprises a plastic bobbin 46 on which an electromagnetic coil 48 is wound. Respective terminations of coil 48 connect to respective terminals 50, 52 that are shaped and, in cooperation with a surround 53 formed as an integral part of cover 36, to form an electrical connector 54 for connecting the fuel injector to an electronic control circuit (not shown) that operates the fuel injector.

Fuel inlet tube 12 is ferromagnetic and comprises a fuel inlet opening 56 at the exposed upper end. An 0-ring seal 61 that serves to seal the fuel injector inlet to a cup, or socket, in an associated fuel rail (not shown) is disposed around the inlet end of tube 12. Lower O-ring 44 is for providing a fluid-tight seal with a port in an engine induction intake system (not shown) when the fuel injector is installed on an engine. Filter assembly 16 is fitted to the open upper end of adjustment tube 14 to filter any particulate material larger than a certain size from fuel entering through inlet opening 56 before the fuel enters adjustment tube 14.

In the calibrated fuel injector, adjustment tube 14 has been positioned axially to an axial location within fuel inlet tube 12 that compresses spring 20 to a desired bias force that urges the armature/needle valve assembly such that the rounded tip end of needle valve 24 is seated on valve seat member 40 to close the central hole through the valve seat. Preferably, the adjustment tube 14 and the inlet tube 12 are crimped together to maintain their relative axial positioning after adjustment calibration has been performed.

After entering fuel inlet tube 12 and passing through adjustment tube 14, fuel enters a space 62 that is cooperatively defined by confronting ends of inlet tube 12 and armature 22 and that contains spring 20. Armature 22 comprises a passageway 64 that communicates space 62 with a passageway 65 in valve body 30, and guide member 38 contains fuel passage holes 38A. This action allows fuel to flow from space 62, through passageways 64, 65 to valve seat member 40. This fuel flow path is indicated by the succession of arrows in Fig. 1.

The upper end of non-ferromagnetic shell 26 is telescopically fitted on and joined to the lower end of inlet tube 12, preferably by laser welding. Valve body shell 28 is ferromagnetic and its upper end is joined in fluid-tight manner to the lower end of non-ferromagnetic shell 26, preferably by laser welding.

The upper end of valve body 30 fits closely inside the lower end of valve body shell 28 and both are joined together in fluid-tight manner, preferably by laser welding. Armature 22 is guided for axial reciprocation by means on the inside wall structure of the fuel injector, specifically by the I.D. of an eyelet 67 that is attached to the upper end of valve body 30. Further guidance of needle valve 24 is by a central guide hole in member 38 through which needle valve 24 passes.

In the closed position shown in Fig. 1, a small working gap 72 exists between fuel inlet tube 12 and armature 22. Coil housing 34 and tube 12 are in contact at 74 and constitute a stator structure that is associated with coil assembly 18. Non-ferromagnetic shell 26 assures that when coil 48 is energized, the magnetic flux will follow a path that includes armature 22. Starting at the lower axial end of housing 34, the magnetic circuit extends through valve body shell 28 and valve body 30 across eyelet 67 to armature 22, and from armature 22 across working gap 72 to inlet tube 12, and back to housing 34. When coil 48 is energized, the spring force on armature 22 is overcome and the armature is attracted toward inlet tube 12 reducing working gap 72. This unseats needle valve 24 from seat 40 to open the fuel injector so fuel is now injected into the engine induction intake system from the injector's nozzle. When the coil ceases to be energized, spring 20 pushes the armature/needle closed on seat member 40.

Bobbin 46 comprises a central through-hole 84 whose upper portion has a larger diameter than its lower portion to provide for the lower end of tube 12 (whose lower portion has a smaller O.D. than its upper portion) to be inserted into the upper end of through-hole 84 when coil assembly 18 is being assembled to inlet tube 12 during that portion of the fabrication process that creates an assembly that is sometimes referred to as a power group. The tube is inserted to an extent that allows its lower end to protrude from the lower end of through-hole 84 so that shell 26 can be welded to the lower end of tube 12. After that, coil assembly 18 is slid down tube 12 to assume the position in Fig. 1, which is its final position. During this time, terminals 50, 52 are straight and parallel with tube 12, having not yet been formed to their final shapes shown in Fig. 1. Coil assembly 18 is kept in this final position by placing housing 34 over the parts as they appear in Fig. 1 and welding it in place as at 74 for example. As can be seen in Fig. 1, the upper end of housing 34 is shaped to axially trap coil assembly 18 against a shoulder of shell 26. The power group is thereafter completed by further assembly process steps, including steps relating to forming terminals 50, 52 to final shape, and injection molding overmold cover 36. The finished power group includes fuel inlet tube 12, coil assembly 18, non-magnetic shell 26, and valve body shell 28. Valve body 30 and parts associated with it constitute what is sometimes called a valve group, and final assembly of the fuel injector comprises assembling the valve group and the power group together, with the various internal parts such as spring 20, armature 22 and needle valve 24 being contained internally within the two assembled groups.

Attention is now directed to details of armature 22 and its association with related parts of fuel injector 10. Armature 22 is fabricated from a suitable ferromagnetic material and has a generally tubular-walled shape having a longitudinal axis 99 that is coaxial with the axis of reciprocation of the armature/needle valve assembly. The exterior of armature 22 may be described as comprising at its lengthwise end that is disposed toward inlet tube 12 in the assembled fuel injector, a circular cylindrical larger O.D. surface 100 having a certain axial length, and at the opposite lengthwise end, a circular cylindrical smaller O.D. surface 102 having a certain axial length. These two surfaces 100, 102 are coaxial with axis 99 and joined by an intermediate frustoconical surface 104 having a certain axial length.

The interior of armature 22 comprises a through-hole 106 that is coaxial with axis 99 and comprises a larger circular I.D. surface 108 extending inwardly from the end that is toward inlet tube 12 in the assembled fuel injector, to a shoulder 110 that is perpendicular to axis 99. From shoulder 110, through-hole 106 continues as an intermediate circular I.D. surface 112 to a frustoconical shoulder 114. From shoulder 114, through-hole 106 continues to the end of the armature as a smaller circular I.D. surface 116.

Surface 116 has an axial length just slightly longer than that of surface 102 along for the full axial length of the latter, the armature has a circular cylindrical wall portion 120 that is of uniform radial thickness. That portion of the armature wall that is generally between shoulders 110 and 114 is designated by the numeral 122 and for the most part it is not of generally uniform thickness. It is this portion 122 of the armature wall that contains a single circular through-hole 124 extending through the armature wall. That portion of the armature wall that is axially co-extensive with surface 108 and is designated by the reference numeral 126 has uniform radial thickness, somewhat thicker than that of wall portion 120.

Through-hole 124 comprises an axis 128 that transversely intersects axis 99, but not perpendicularly; rather the two are at an obtuse angle in the direction of fuel flow through the armature. The axis 128 is also generally perpendicular to an element of the frustoconical surface 104 and passes through the axis 99 of the armature. The diameter of through-hole 124 is such that it does not intersect either the shoulder 110 or the wall portion 126 of the armature but the exiting portion of the diameter on the surface 104 is lower than the entrance diameter to the smaller circular I.D. surface 116. Thus shoulder 110 and wall portion 126 are each circumferentially uninterrupted, and they also form a seat for the lower end of spring 20 which fits with close conformity therein such that the portion of through-hole 106 formed by surface 112 forms a continuation of the cylindrical void that is bounded by the convolutions of spring 20. The diameter of through-hole 124 is substantially equal to the I.D. of surface 112 so that there is no constriction or splitting of the flow as it passes through the armature, but only a change in direction. The annular area between armature 22 and the passage 65 of valve body 30 that is available for flow exiting through-hole 124 is at least as large as the area of through-hole 124 so that this annular area imposes no constriction on the flow coming out of the armature. Surface 100 also sufficiently axially overlaps ferromagnetic valve body 30 that it imposes no significant increase in reluctance of the fuel injector's magnetic circuit at their interface, and the portion of the armature that is between shoulder 110 and the upper axial end of the armature provides the principal path through the armature for magnetic flux issued by the electromagnetic coil.

One end portion of needle valve 24 that is inserted into I.D. 116 of through-hole 106 has a close diametrical fit therein and sufficient insertion length that the two coaxially align to the required degree and can be joined and maintained in that alignment by a joining operation such as crimping and/or welding. This inserted end portion of needle valve 24 comprises a lead 130 and several spaced apart, parallel circumferential grooves 132 that facilitate the assembly and joining process. The extent of the needle valve's insertion into the armature does not obstruct through-hole 124.

While a presently preferred embodiment of the invention has been illustrated and described, it is to be appreciated that principles of the invention apply to all equivalent constructions that fall within the scope of the following claims. For example, a ball, instead of a needle could be employed as the valve element in certain fuel injectors.

## Claims

1. An armature (22) for an electrically operated fuel injector (10) for injecting fuel into an internal combustion engine, the fuel injector having a fuel inlet (56), a nozzle having a valve seat (40) via which fuel is injected into the engine from the injector, an internal passage within the injector for conveying fuel that has entered the fuel inlet to the nozzle, and a solenoid-operated valve mechanism for selectively opening and closing the valve seat, the mechanism having an armature and a valve element (24) joined together for axial reciprocal movement within the internal passage, and an electromagnetic coil (48) operative to open and close the valve seat in accordance with selective energizing of the electromagnetic coil, and a spring (20) biasing the valve element (24) closing the valve seat, the armature characterized by:
an elongated member having a first axially extending section (100) with a first outside diameter at one end, a second axially extending section (102) with a second outside diameter at the opposite end and a third axially extending frustoconical section (104) connecting said first and second sections;
a stepped passageway (106) extending from the internal passage and extending the length of said elongated member, said stepped passageway (106) having a first counterbore (108) axially extending a distance less than the axial length of said first section (100), a second counterbore (116) extending from said opposite end of said tubular member a distance into said frustoconical section (104) and a third counterbore (112) interconnecting said first (108) and second (116) counterbores;
said second counterbore (116) having an internal diameter that is smaller than said third counterbore (112) which has an internal diameter that is smaller than said first counterbore (108);
a shoulder (110) formed at the junction of said first (108) and third (112) counterbores for seating the spring (20), and
a single additional through-hole (124) having an axis normal to an element of said frustoconical surface (122) extending into said third counterbore (112), said through-hole (124) having its circumferential periphery on the surface (122) of said frustoconical section (104) with a portion of said periphery axially below the junction (114) between said second (116) and third (112) counterbores;
whereby fuel flows from the fuel inlet through said internal passage and through said first counterbore (108) into said second counterbore (116) and said additional through-hole (124) of said armature (22) to the nozzle.

2. An armature for an electrically operated fuel injector as set forth in claim 1 wherein the valve element (24) is located and secured in said second counterbore (116) and does not obstruct said single additional through-hole (124).

3. An armature for an electrically operated fuel injector as set forth in claim 1 wherein said single additional through-hole (124) has a diameter almost as great as the axially extending surface length of said frustoconical surface (122).

4. An armature for an electrically operated fuel injector as set forth in claim 3 wherein said single additional through-hole (124) does not intersect said shoulder (110) or said first counterbore (108) of said armature (22).

5. An armature for an electrically operated fuel injector as set forth in claim 3 wherein said single additional through-hole (124) has a diameter so that there is no significant constriction of the fuel flow as it passes through the armature (22), but only a change in direction.

6. An armature for an electrically operated fuel injector as set forth in claim 1 wherein that portion (100) of said elongated member between said shoulder (110) and said one end of said armature provides the principal path through said armature for magnetic flux issued by the electromagnetic coil.

7. An armature for an electrically operated fuel injector as set forth in claim 1 wherein the spring (20) is a helical coil spring, and said first counterbore (108) receives said spring (20) with close conformity therein such that said first counterbore (108) and said spring (20) forms a fuel passage that is bounded by convolutions of said spring.

## Patentansprüche

1. Anker (22) für ein elektrisch betätigtes Kraftstoffeinspritzventil (10) zum Einspritzen von Kraftstoff in eine Brennkraftmaschine, wobei das Kraftstoffeinspritzventil aufweist: einen Kraftstoffeinlaß (56), eine Düse mit einem Ventilsitz (40), über den Kraftstoff aus dem Einspritzventil in die Brennkraftmaschine eingespritzt wird, einem Innenkanal innerhalb des Einspritzventils zum Fördern von in den Kraftstoffeinlaß eingetretenen Kraftstoff zu der Düse, und einem elektromagnetisch betätigten Ventilmechanismus zum wahlweisen Öffnen und Schließen des Ventilsitzes, wobei der Ventilmechanismus einen Anker und ein Ventilglied (24) aufweist, die miteinander verbunden sind, um eine axiale Hin- und Herbewegung innerhalb des Strömungskanals auszuführen, und einer elektromagnetischen Spüle (48), die in Abhängigkeit von einer wahlweisen Erregung der elektromagnetischen Spule den Ventilsitz öffnet und schließt, und eine Feder (20), die das Ventilglied (24) in eine den Ventilsitz schließende Stellung vorspannt, wobei der Anker gekennzeichnet ist durch:
ein längliches Teil mit einem ersten axial verlaufenden Abschnitt 100, der an einem Ende einen ersten Außendurchmesser hat, einem zweiten axial verlaufenden Abschnitt 102, der an dem entgegengesetzten Ende einen zweiten Außendurchmesser hat, und einem axial verlaufenden kegelstumpfförmigen dritten Abschnitt 104, der den ersten und zweiten Abschnitt miteinander verbindet;
eine abgestufte Bohrung 106, die von dem Innenkanal ausgeht und sich über die Länge des länglichen Teils erstreckt, wobei die abgestufte Bohrung 106 aufweist: eine erste Gegenbohrung 108, die eine axiale Länge hat, welche kleiner als die axiale Länge des ersten Abschnittes 100 ist, eine zweite Gegenbührung 116, die sich von dem entgegengesetzten Ende des länglichen Teils eine vorgegebene Strecke in den kegelsstumpfförmigen Abschnitt 104 hinein erstreckt, und eine dritte Gegenbohrung 112, die die erste (108) und zweite (116) Gegenbohrung miteinander verbindet;
wobei die zweite Gegenbohrung (116) einen Innendurchmesser hat, der kleiner als die dritte Gegenbohrung (112) ist, welche einen Innendurchmesser hat, der kleiner als die erste Gegenbohrung (108) ist;
eine Schulter (110), die an dem Übergang zwischen der ersten (108) und der dritten (112) Gegenbohrung gebildet ist, um die Feder (20) abzustützen, und
ein einzelnes zusätzliches Durchgangsloch (124) mit einer Achse, die senkrecht zu einem in die dritte Gegenbohrung (112) ragenden Element der kegelstumpfförmigen Fläche (122) verläuft, wobei das Durchgangsloch (124) mit seinem Außenumfang auf der Fläche (122) des kegelstumpfförmigen Abschnittes (104) liegt und ein Abschnitt des Außenumfangs axial unterhalb des Übergangs (114) zwischen der zweiten (116) und dritten (112) Gegenbohrung liegt;
so daß Kraftstoff von dem Kraftstoffeinlaß durch den Innenkanal und durch die erste Gegenbohrung (108) in die zweite Gegenbohrung (116) und das zusätzliche Durchgangsloch (124) des Ankers (22) zu der Düse strömt.

2. Anker für ein elektrisch betätigtes Kraftstoffeinspritzventil nach Anspruch 1, bei dem das Ventilglied (24) in der zweiten Gegenbohrung (116) angeordnet und festgelegt ist und das einzelne zusätzliche Durchgangsloch (124) frei läßt.

3. Anker für ein elektrisch betätigtes Kraftstoffeinspritzventil nach Anspruch 1, bei dem das einzelne zusätzliche Durchgangsloch (124) einen Durchmesser hat, der nahezu so groß wie die axiale Länge der kegelstumpfförmigen Fläche (122) ist.

4. Anker für ein elektrisch betätigtes Kraftstoffeinspritzventil nach Anspruch 3, bei dem das einzelne zusätzliche Durchgangsloch (124) die Schulter (110) oder die erste Gegenbohrung des Ankers (22) nicht schneidet.

5. Anker für ein elektrisch betätigtes Kraftstoffeinspritzventil nach Anspruch 3, bei dem das einzelne zusätzliche Durchgangsloch (124) einen solchen Durchmesser hat, daß sich keine merkliche Drosselung des Kraftstoffstroms bei seinem Durchgang durch den Anker (22), sondern lediglich eine Richtungsänderung ergibt.

6. Anker für ein elektrisch betätigtes Kraftstoffeinspritzventil nach Anspruch 1, bei dem der zwischen der Schulter (110) und dem besagten einen Ende des Ankers liegende Abschnitt (100) des länglichen Teils den Hauptflußpfad durch den Anker für den von der elektromagnetischen Spule erzeugten Magnetfluß bildet.

7. Anker für ein elektrisch betätigtes Kraftstoffeinspritzventil nach Anspruch 1, bei dem die Feder (20) eine Schraubenfeder ist und die erste Gegenbohrung (108) die Feder (20) eng anliegend umgibt, derart, daß die erste Gegenbohrung (108) und die Feder (20) einen Kraftstoffkanal bilden, der von Windungen der Feder begrenzt wird.

## Revendications

1. Armature (22) pour un injecteur de carburant commandé électriquement (10) destiné à injecter du carburant dans un moteur à combustion interne, l'injecteur de carburant présentant une entrée de carburant (56), une buse d'injection comportant un siège de soupape (40) à travers lequel le carburant est injecté dans le moteur depuis l'injecteur, un passage interne à l'intérieur de l'injecteur destiné à transférer le carburant qui est introduit par l'entrée de carburant vers la buse d'injection, un mécanisme de soupape commandé par électro-aimant destiné à ouvrir et à fermer le siège de soupape de manière sélective, le mécanisme comprenant une armature et un élément formant soupape (24) reliés ensemble de manière à se déplacer axialement suivant un mouvement alternatif à l'intérieur du passage interne, et un enroulement électromagnétique (48) opérationnel pour ouvrir et fermer le siège de soupape en fonction de l'alimentation sélective de l'enroulement électromagnétique, et un ressort (20) chargeant l'élément formant soupape (24) pour fermer le siège de clapet, l'armature étant caractérisée par:
un élément allongé présentant une première section s'étendant axialement (100) avec un premier diamètre externe à une extrémité, une deuxième section s'étendant axialement (102) avec un second diamètre externe à l'extrémité opposée et une troisième section tronconique s'étendant axialement (104) reliant lesdites première et deuxième sections;
une voie de passage étagée (106) s'étendant à partir du passage interne et s'étendant sur la longueur dudit élément allongé, ladite voie de passage étagée (106) présentant un premier logement cylindrique (108) s'étendant axialement sur une distance inférieure à la longueur axiale de ladite première section (100), un deuxième logement cylindrique (116) s'étendant à partir de ladite extrémité opposée dudit élément tubulaire sur une certaine distance dans ladite section tronconique (104) et un troisième logement cylindrique (112) interconnectant lesdits premier (108) et deuxième (116) logements cylindriques;
ledit deuxième logement cylindrique (116) présentant un diamètre interne qui est inférieur à celui dudit troisième logement cylindrique (112) qui présente un diamètre interne qui est inférieur à celui dudit premier logement cylindrique (108);
un épaulement (110) formé à la jonction desdits premier (108) et troisième (112) logements cylindriques servant d'appui au ressort (20), et
un orifice unique traversant supplémentaire (124) présentant un axe normal à un élément de ladite surface tronconique (122) s'étendant dans ledit troisième logement cylindrique (112), la périphérie circonférentielle dudit orifice traversant (124) étant située sur la surface (122) de ladite section tronconique (104), une partie de ladite périphérie étant située axialement au-dessous de la jonction (114) entre lesdits deuxième (116) et troisième (112) logements cylindriques;
ce par quoi, le carburant passe depuis l'entrée de carburant par ledit passage interne et par ledit premier logement cylindrique (108) vers ledit deuxième logement cylindrique (116) et ledit orifice traversant supplémentaire (124) de ladite armature (22) vers la buse d'injection.

2. Armature pour un injecteur de carburant commandé électriquement selon la revendication 1, dans laquelle l'élément formant soupape (24) est situé et maintenu dans ledit deuxième logement cylindrique (116) et n'obstrue pas ledit orifice unique traversant supplémentaire (124).

3. Armature pour un injecteur de carburant commandé électriquement selon la revendication 1, dans laquelle ledit orifice unique traversant supplémentaire (124) présente un diamètre au moins égal à la longueur de la surface s'étendant axialement de ladite surface tronconique (122).

4. Armature pour un injecteur de carburant commandé électriquement selon la revendication 3, dans laquelle ledit orifice unique traversant supplémentaire (124) ne coupe pas ledit épaulement (110) ou ledit premier logement cylindrique (108) de ladite armature (22).

5. Armature pour un injecteur de carburant commandé électriquement selon la revendication 3, dans laquelle ledit orifice unique traversant (124) présente un diamètre tel qu'il n'existe pas de restriction sensible à l'écoulement de carburant lorsqu'il passe à travers l'armature (22), mais seulement un changement de direction.

6. Armature pour un injecteur de carburant commandé électriquement selon la revendication 1, dans laquelle la partie (100) dudit élément allongé entre ledit épaulement (110) et ladite première extrémité de ladite armature assure le trajet principal à travers ladite armature pour le flux magnétique produit par l'enroulement électromagnétique.

7. Armature pour un injecteur de carburant commandé électriquement selon la revendication 1, dans laquelle le ressort (20) est un ressort cylindrique hélicoïdal, et le premier logement cylindrique (108) reçoit ledit ressort (20) avec un jeu limité à l'intérieur de telle manière que ledit premier logement cylindrique (108) et ledit ressort (20) forment un passage de carburant qui est bordé par les spires dudit ressort.
